# EUROPÄISCHE PATENTSCHRIFT

(11) **EP 0 288 604 B1**
(45) Veröffentlichungstag und Bekanntmachung des Hinweises auf die Patenterteilung: **22.09.1993**
(21) Anmeldenummer: 87117083.3
(22) Anmeldetag: 19.11.1987
(51) Int. Cl.: F16D 55/22, F16D 55/224

(54) **Teilbelag-Scheibenbremse**
Spot-type disc brake
Frein à disque à garniture partielle

(30) Priorität: 25.04.1987 DE 3713948
(43) Veröffentlichungstag der Anmeldung: 02.11.1988
(73) Patentinhaber: ITT Automotive Europe GmbH, 60488 Frankfurt (DE)
(72) Erfinder: Weiler, Rolf, D-6230 Frankfurt/Main 90 (DE); Bach, Uwe, D-6272 Niedernhausen (DE); Ceylan, Ahmet Demir, D-6000 Frankfurt/Main (DE)

(56) Entgegenhaltungen:
- EP-A- 0 018 913
- EP-A- 0 097 418
- DE-A- 1 935 863
- DE-A- 2 351 447
- DE-A- 2 544 370
- DE-A- 3 614 786
- DE-B- 2 061 673
- DE-B- 2 160 056
- DE-C- 2 849 952
- FR-A- 2 284 800
- Bremsenhandbuch, Seite 197, 9.Auflage, Bartsch-Verlag, Ottobrunn bei München

## Beschreibung

Die Erfindung betrifft eine Teilbelag-Scheibenbremse mit einem Bremssattel, in dem zwei Bremsbeläge mittels Stiften gehalten und geführt sind gemäß dem Oberbegriff des Patentspruches 1.

Auf der Seite 197 des Bremsenhandbuches, 9. Auflage aus dem Bartsch-Verlag Ottobrunn bei München, ist eine solche Teilbelag-Scheibenbremse gezeigt. Die Belagträger weisen Löcher auf, durch die Stifte geführt sind. Werden die Bremsen längere Zeit nicht benutzt, so findet eine Korrosion zwischen den Belagträgern und dem Bremssattel statt. Um eine Korrosion zu verhindern, hat man an diesen Stellen zwischen Belagträgern und Bremssattel nicht rostende Materialien in den Schacht des Bremssattels eingesetzt.

Aus der DE-A-28 49 952 (Seite 6, 2. Absatz) ist eine Teilbelag-Scheibenbremse mit einem die Bremsscheibe umgreifenden Bremssattel bekannt. Beiderseits der Bremsscheibe sind innerhalb des Bremssattels zwei Bremsklötze (Bremsbeläge) angeordnet, die sich je aus einer Belagplatte (Reibbelag) und einer metallischen Rückenplatte (Belagträger) zusammensetzen. Der Bremssattel und die Rückenplatte der Bremsklötze sind unabhängig voneinander an parallel zur Drehachse der Bremsscheibe an den Armen des Bremsträgers befestigten Stiften verschiebbar geführt bzw. abgestützt. Die Stifte dienen gleichzeitig als Führungsbolzen für den Bremssattel.

Der Erfindung liegt die Aufgabe zugrunde, eine einfache Teilbelag-Scheibenbremse anzugeben, bei der eine Korrosion zwischen Belagträgern und Bremssattel nicht stattfindet.

Diese Aufgabe wird gemäß den Merkmalen des Patentanspruchs 1 gelöst. Vorteilhafte Weiterbildungen der Erfindung sind in den Unteransprüchen genannt.

Zum besseren Verständnis der Erfindung wird nachstehend ein Ausführungsbeispiel anhand der Zeichnungen näher erläutert.

Es zeigen:
- Fig. 1: eine Teilbelag-Scheibenbremse in Draufsicht,
- Fig. 2: eine Teilbelag-Scheibenbremse in Seitenansicht,
- Fig. 3: eine Beta-Haltefeder und
- Fig. 4: einen Stift.

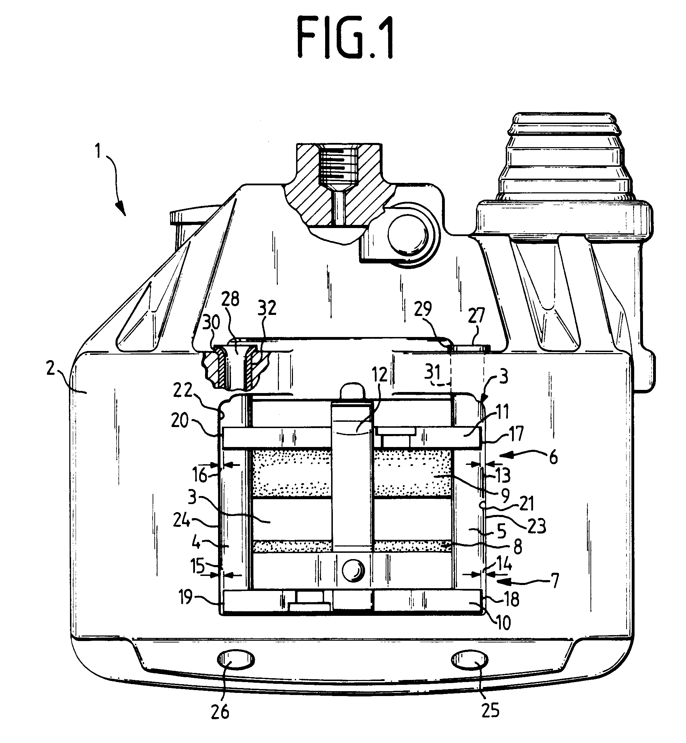

Fig. 1 zeigt in Draufsicht eine Teilbelag-Scheibenbremse 1 mit einem Bremssattel 2, der einen Schacht 3 aufweist. In dem Schacht 3 sind Stifte 4,5 angeordnet, die als Halterung und Führung für zwei Bremsbeläge 6,7 dienen. Jeder der Bremsbeläge 6,7 weist einen Reibbelag 8,9 und einen Belagträger 10,11 auf. Eine Feder 12 verhindert das Klappern der Bremsbeläge 6,7. Die Belagträger 10,11 der Bremsbeläge 6,7 werden von den Stiften 4,5 so gehalten und geführt, daß im Ruhezustand und bei Bremsbetätigung immer ein radialer Abstand 13,14,15,16, im folgenden Spalt genannt, zwischen den Wänden 17 bis 20 der Belagträger 10,11 und der Schachtwand 21,22 vorhanden ist. Die Zylinderoberflächen 23,24 der Stifte 4,5 liegen an den seitlichen Schachtwänden 21,22 an bzw. stützen sich dort ab. Die Stifte 4,5 sind hohl und weisen einen Schlitz auf, so daß die Stifte 4, 5 als Spannstifte in Bohrungen 25 und 26 des Bremssattels 2 mit Reibhaftung gehalten sind bzw. verklemmen. Die Stifte 4,5 weisen an ihren Enden 27,28 Umbördelungen 29,30 auf, um ein seitliches Verrutschen in Richtung der Bohrungen 25,26 zu verhindern. Die Stifte 4,5 sind an ihren umbördelten Enden 27,28 durch weitere Bohrungen 31,32 geführt.

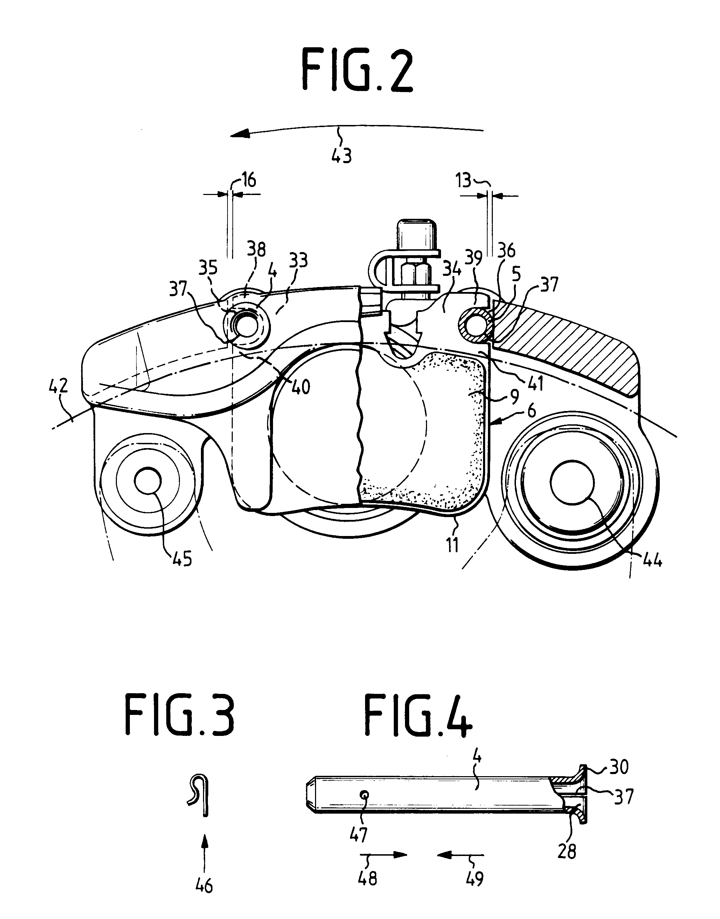

Fig. 2 zeigt in Seitenansicht die Teilbelag-Scheibenbremse 1. Der Belagträger 11 des Bremsbelages 6 weist in Randbereichen 33,34 nach der Seite hin offene Ausnehmungen 35,36 auf, in die die Stifte 4,5 eingreifen. Vorteilhaft fallen Korrosionsprodukte aus den halbkreisförmigen Ausnehmungen 35,36 heraus. Die Stifte 4,5 sind hohl und weisen einen Schlitz 37 auf, so daß die Stifte als Spannstifte in den Bohrungen 25 und 26 des Bremssattels 2 mit Reibhaftung gehalten sind bzw. verklemmen. Der Durchmesser der Stifte 4,5 und die Ausnehmungen 35 und 36 des Belagträgers 11 sind so bemessen, daß die Stifte 4,5 im wesentlichen mehr als bis zur Hälfte in den Ausnehmungen 35,36 versinken. Arme 38,39 und Abschnitte 40,41 des Belagträgers 11 bilden mit den Schachtwänden 21,22 die definierten Spalte 13 und 16, so daß eine Berührung der Schachtwände 21,22 mit dem Belagträger 11 nicht stattfindet bzw. daß keine Rostbrücken entstehen. Die Beschreibung für den Belagträger 11 gilt im wesentlichen auch für den spiegelbildlich zu einer Bremsscheibe 42 angeordneten Belagträger 10. Vorteilhaft wird dadurch eine Korrosion zwischen den Belagträgern 10,11 und dem Bremssattel 2 verhindert und ein Trennblech aus Nirosta-Stahl bzw. ein Edelstahlblech eingespart. Die Bremsscheibe 42 dreht sich bei einer Vorwärtsfahrt in Drehrichtung 43. Der Bremssattel 2 ist über Hülsen 44,45 und (nicht dargestellte) Bolzen direkt am Achsschenkel des Autos angeflanscht. Der Bremssattel 2 ist getragen von einem Hauptlager 44 aus Bolzen und Traghülse, das eine Umfangskraft und eine Führung übernimmt, und einem Loslager 45 aus Bolzen und Hülse, das eine Führung übernimmt. Der Bremssattel 2 übernimmt die Abstützung beider Bremsbeläge 6,7 über die Stifte 4,5 wegen der Umfangskraftübertragung.

Verfahrenstechnisch wird die dem Hauptlager 44 gegenüberliegende und dem Loslager 45 benachbarte erste Bohrung 26,32 für den Stift 4 so gebohrt, daß die Schachtwand 22 eine Tangentialebene der Bohrung 26, 32 bildet, um den Stift 4 mit geringen Toleranzen an der Schachtwand 22 anliegend anzuordnen, da dort bei einer Vorwärtsfahrt (in Fahrtrichtung) die größten Bremskräfte während eines Bremsvorganges auftreten. Die zweite Bohrung 25,31 wird vom gleichen Werkzeug in einem festen Abstand zu der ersten Bohrung 26,32 gebohrt, weil dort bei einer Bremsung aus einer Rückwärtsfahrt nur geringe Bremskräfte auftreten und eine exakte Anlage des Stiftes 5 an der Schachtwand 21 nicht unbedingt erforderlich ist.

Fig. 3 zeigt eine Beta-Feder 46.

Fig. 4 zeigt einen der Stifte 4,5 mit einer Öffnung 47, durch die die Beta-Feder 46 geführt ist. Anstelle der Verklemmung der Spannstifte 4,5 in den Öffnungen 25,26 kann die Beta-Feder 46 durch die Öffnung 47 geführt sein, um ein Verrutschen der Stifte 4,5 in eine erste Richtung 48 zu verhindern. Zur Festsetzung der Stifte 4,5 und zur Verhinderung des Verrutschens in eine zweite Richtung 49 ist eine Umbördelung 30 am Ende 28 des Stiftes 4 vorgesehen. Vorteilhaft sind die Stifte 4, 5 gerollte Stahlbleche aus Nirosta oder Edelstahl.

## Patentansprüche

1. Teilbelag-Scheibenbremse (1) mit einem Bremssattel, der einen Schacht (3) aufweist, in dem zwei Bremsbeläge (6, 7) mittels Stiften (4, 5) gehalten und geführt sind, dadurch **gekennzeichnet,** daß die Bremsbeläge (6,7) in ihren Randbereichen (33, 34) nach der Seite hin offene Ausnehmungen (35,36) aufweisen, in die die Stifte (4,5) eingreifen, und daß die Stifte (4,5) sich an seitlichen Schachtwänden (21,22) des die Bremsbeläge (6,7) aufnehmenden Schachtes (3) im Bremssattel (2) abstützen.

2. Teilbelag-Scheibenbremse (1) nach Anspruch 1, dadurch **gekennzeichnet,** daß die Stifte (4,5) Vollstifte sind.

3. Teilbelag-Scheibenbremse (1) nach Anspruch 1, dadurch **gekennzeichnet,** daß die Stifte (4,5) hohl sind.

4. Teilbelag-Scheibenbremse (1) nach Anspruch 3, dadurch **gekennzeichnet,** daß die Stifte (4,5) geschlitzt sind.

5. Teilbelag-Scheibenbremse (1) nach einem der Ansprüche 3 oder 4, dadurch **gekennzeichnet,** daß die Stifte (4,5) an ihren Enden (27, 28) Umbördelungen (29, 30) aufweisen.

6. Teilbelag-Scheibenbremse (1) nach einem der vorhergehenden Ansprüche, dadurch **gekennzeichnet,** daß die Stifte (4,5) Öffnungen (47) zur Aufnahme von Beta-Federn (46) aufweisen.

7. Verfahren zum Bohren von Bohrungen (25, 26, 31, 32) in einen Bremssattel (2) einer Teilbelag-Scheibenbremse (1) nach einem der vorhergehenden Ansprüche mit einem Hauptlager (44) und einem Loslager (45), wobei in den Bohrungen (25, 26, 31, 32) Stifte (4, 5) zur Halterung und Führung der Bremsbeläge (6, 7) angeordnet sind, dadurch **gekennzeichnet,** daß die erste, dem Loslager (45) benachbarte Bohrung (26, 32) so gebohrt wird, daß die Schachtwand (22) eine Tangentialebene der Bohrung (26, 32) bildet, und daß die zweite dem Hauptlager (44) benachbarte Bohrung (25, 31) in einem festen Abstand zu der ersten Bohrung (26, 32) gebohrt wird.

8. Verfahren nach Anspruch 7, dadurch **gekennzeichnet,** daß die zweite Bohrung (25, 31) von einem gleichen Werkzeug wie die erste Bohrung (26, 32) gebohrt wird.

## Claims

1. A spot-type disc brake (1) comprising a brake caliper with an aperture (3) in which two brake pads (6, 7) are held and guided by means of pins (4, 5),
**characterized** in that the brake pads (6, 7) in their fringe areas (33, 34) contain laterally open recesses (35, 36) into which the pins (4, 5) are engaging, and in that the pins (4, 5) take support on lateral aperture walls (21, 22) of the aperture (3) in the brake caliper (2) receiving the brake pads (6, 7).

2. A spot-type disc brake (1) as claimed in claim 1,
**characterized** in that the pins (4, 5) are solid pins.

3. A spot-type disc brake (1) as claimed in claim 1,
**characterized** in that the pins (4, 5) are hollow.

4. A spot-type disc brake (1) as claimed in claim 3,
**characterized** in that the pins (4, 5) are slotted.

5. A spot-type disc brake (1) as claimed in any one of the claims 3 or 4,
**characterized** in that the pins (4, 5) have beaded portions (29, 30) at their ends (27, 28).

6. A spot-type disc brake (1) as claimed in any one of the preceding claims,
**characterized** in that the pins (4, 5) contain openings (47) for accommodating beta-shaped springs (46).

7. A method for drilling bores (25, 26, 31, 32) into a brake caliper (2) of a spot-type disc brake (1) as claimed in any one of the preceding claims, comprising a main bearing (44) and a movable bearing (45), with pins (4, 5) for holding and guiding the brake pads (6, 7) being arranged in the bores (25, 26, 31, 32),
**characterized** in that the first bore (26, 32) adjacent to the movable bearing (45) is drilled such that the aperture wall (22) forms a tangential plane of the bore (26, 32), and in that the second bore (25, 31) adjacent to the main bearing (44) is drilled at a fixed distance relative to the first bore (26, 32).

8. A method as claimed in claim 7,
**characterized** in that the second bore (25, 31) is drilled by a similar tool like the first bore (26, 32).

## Revendications

1. Frein à disque (1) à garnitures partielles, comprenant un étrier de frein qui comporte une cavité (3) dans laquelle deux plaquettes de frein (6, 7) sont maintenues et guidées au moyen de tiges (4, 5), caractérisé en ce que, dans les zones de leurs bords (33, 34), les garnitures de frein (6, 7) comportent des encoches (35, 36) qui s'ouvrent sur le côté et dans lesquelles les tiges (4, 5) s'emboîtent et en ce que ces tiges (4, 5) prennent appui sur des parois latérales (21, 22) de la cavité (3) de l'étrier de frein (2) qui sert à loger les plaquettes de frein (6, 7).

2. Frein à disque (1) à garnitures partielles suivant la revendication 1, caractérisé en ce que les tiges (4, 5) sont des tiges pleines.

3. Frein à disque (1) à garnitures partielles suivant la revendication 1, caractérisé en ce que les tiges (4, 5) sont creuses.

4. Frein à disque (1) à garnitures partielles suivant la revendication 3, caractérisé en ce que les tiges (4, 5) sont fendues.

5. Frein à disque (1) à garnitures partielles suivant l'une des revendications 3 et 4, caractérisé en ce qu'à leurs extrémités (27, 28), les tiges (4, 5) comportent des bords roulés (29, 30).

6. Frein à disque (1) à garnitures partielles suivant l'une des revendications précédentes, caractérisé en ce que les tiges (4, 5) comportent des trous (47) destinés à recevoir des ressorts (46) en forme de β (Bêta).

7. Procédé de perçage de trous (25, 26, 31, 32) dans un étrier de frein (2) d'un frein à disque (1) à garnitures partielles suivant l'une des revendications précédentes, cet étrier de frein (2) comportant un palier principal (44) et un palier libre (45) et des tiges (4, 5) étant disposées dans les trous (25, 26, 31, 32) en vue du maintien et du guidage des plaquettes de frein (6, 7), caractérisé en ce que les premiers trous (26, 32) voisins du palier libre (45) sont percés de façon telle que la paroi (22) de la cavité de l'étrier forme un plan tangent à ces trous (26, 32) et en ce que les seconds trous (25, 31) voisins du palier principal (44) sont percés à une distance fixe des premiers trous (26, 32).

8. Procédé suivant la revendication 7, caractérisé en ce que les seconds trous (25, 31) sont percés au moyen du même outil que les premiers trous (26, 32).
